# EUROPEAN PATENT APPLICATION

(11) **EP 2 886 227 A1**
(43) Date of publication of application: **24.06.2015**
(21) Application number: 13197578.1
(22) Date of filing: 17.12.2013
(51) Int. Cl.: B22F 3/11, B22D 19/00, B22D 19/16, C08K 3/08, H01F 1/00, H01B 1/22

(54) **Composite material with hollow spheres having ferromagnetic properties, a method and device for manufacturing thereof**

(71) Applicant: Rigas Tehniska universitate, 1658 Riga (LV)
(72) Inventor: Mironovs, Viktors, 1067 Riga (LV); Zemcenkovs, Vjaceslavs, 1067 Riga (LV); Shishkin, Andrei, 2015 Jurmala (LV)
(74) Representative: Fortuna, Jevgenijs

(57) **Abstract**

The invention relates to the field of mechanical engineering and powder metallurgy. It can be used for the manufacture of parts of composite materials, such as electrical contacts, elements of braking devices, fly-wheels and cams, as well as a number of structural parts for the aircraft and automobile industries. There is proposed a product of composite material comprising a material matrix and hollow spheres located therein, where the hollow spheres are made of or covered by a material having ferromagnetic properties and are displaced in a predetermined direction relative to an axis of the product. The proposed method of manufacturing of a product of composite material, comprising a powder matrix and hollow spheres with ferromagnetic properties located in the powder matrix, comprises the steps of filling a mould, compacting and sintering (or solidifying), where during the filling of the mould the hollow spheres are displaced relative to an axis of the product and are retained by a magnetic field up to the end of filling the mould. The device proposed comprises a mould and a means for filling and compacting of the material, where it further comprises a magnetic or electromagnetic means adapted for displacement of the hollow spheres having ferromagnetic properties relative to the axis of the product during filling the mould with the hollow spheres and powder matrix.

## Description

### Field of Invention

The invention relates to the field of mechanical engineering and powder metallurgy. It can be used for the manufacture of parts of composite materials, such as electrical contacts, elements of braking devices, fly-wheels and cams, as well as a number of structural parts for the aircraft and automobile industries.

### Background Art

There is known a metal matrix composite comprising a metal (copper) matrix, silicon carbide reinforcing elements and reinforcement particles of nano-diamond powder [1]. The technical result is the increase of the hardness, endurance and strength properties of the material compared to conventional copper. The disadvantage of the material is its high weight and limited application.

There are known composite materials comprising a substrate and reinforcing fibers, for example of metal [2]. These materials have increased strength. Their disadvantage is that the fibers are placed in a rather chaotic way. Therefore it is not possible to use the properties of the material in full. Weight reduction is negligible.

There is known a copper-based composite material, containing molybdenum borosilicate glass [3]. Glass is introduced into the material in powder form by mixing with other components. The positive technical result is reducing of the weight of an article, reducing the wear and coefficient of friction, allowing continuity of operation when grease supply is terminated and high corrosion resistance. However, because of the density of the glass particles the decrease in weight is relatively small, and the given distribution is limited.

There is also known a composite material comprising matrix material (polymeric binder) and hollow microspheres [4-6]. The hollow microspheres have a particle size in the range of 10-500 µm. Glass, ceramic, polymeric and ash microspheres are used, as well as mixtures thereof. The positive technical result is the decrease in weight of the product or of its part, the increased corrosion protection and thermal insulation protection of the material. The disadvantage of the material is its low strength. In addition the methods of manufacturing used do not provide for controlling the location of the microspheres in the volume of the product.

There are known methods [7] allowing to predetermine and obtain article having density being different over its volume. However setting of density according to the known solution can be made in only one direction. The known method (referred to in [7] as "direct metal printing") is quite labour consuming and contains at least for steps. Moreover this method can be used for producing small sized articles and only from titanium and aluminium alloys. The method, referred to in [7] as "reactive processing" allows obtaining only sheet sandwich panels due to use of rolling technology. Thus the known methods to not provide for predetermined distribution of porosity and mass of the article.

There is known a composite material comprising a substrate and hollow metal spheres, such as of steel [8]. The hollow metal spheres have a size of up to several mm. The positive technical result is a very significant reduction in product weight, high temperature and corrosion resistance. The disadvantage of the method is difficulty of obtaining products from the composite materials with a large difference in the bulk density of components as bulk density of hollow metallic spheres is an order of magnitude less than a bulk density of metallic powders. There are also restrictions on the shape of the resulting products. In particular, it is difficult to obtain products with a variable mass.

### Disclosure of the Invention

The inventors propose a method and a composite material with hollow spheres, characterized in that the hollow spheres are displaced in a predetermined direction in the article or arranged with a predetermined distribution within the material's volume or in plane. The hollow spheres may be made of metal with magnetic properties as well as from ceramic or polymeric hollow elements having ferromagnetic particles placed on their surface or having a coating with ferromagnetic properties. For a given orientation of the layer of hollow spheres in the volume of the product a mesh, perforated sheet or tape can be used. Polymers, metals and alloys, as well as ceramic and metallic powders can be used as matrix material. In general the matrix material is selected such that it does not have ferromagnetic properties, or its ferromagnetic properties are considerably lower than ferromagnetic properties of the hollow spheres, namely, the matrix material should have maximal magnetic inductivity less than 200 and coercive force less than 4 KA/m.

There is proposed a method for obtaining said composite material, a method comprising filling moulds with matrix material and hollow spheres with ferromagnetic properties, and obtaining the product according to the respective technology; in case of matrix material being metallic powder - compaction and subsequent sintering; in case of casting metal or casting alloy - cooling and solidifying of the metal or metal alloy; in case of matrix being a polymer - drying or solidifying of the polymer. In the process of filling the mould hollow spheres are being displaced about axis of the product and retained in this position by a permanent magnet or electromagnet until finishing filing the mould. For setting a given orientation of hollow spheres layer in product a perforated sheet or tape acting as a magnetic core may be used. Additionally, the perforated material can be profiled for obtaining more complex structures and increase the strength properties of the product.

To implement the method a device is proposed comprising mould and means for filling and compacting the material. The device is further provided with magnetic (electromagnetic) means adapted for displacement hollow spheres about a product's axis and their holding in such position until finishing filing the mould.

The proposed composite material, the method for obtaining said composite material and apparatus for obtaining said composite material are further explained in the drawings and examples of implementation of the invention.

### Brief Description of Drawings

Fig. 1 shows a composite material according to one embodiment of the invention;
Fig. 2 - a composite material according another embodiment of the invention;
Fig. 3 - one embodiment of a device for compacting the composite material before sintering;
Fig. 4a and Fig. 4b show yet another embodiments of the composite material, Fig. 4a - using a perforated steel sheet, and Fig. 4b - using a perforated steel pipe or rolled up perforated steel sheet;
Fig. 5 - another embodiment of the composite material using two profiled perforated sheets to obtain an article complicated structure and increase its strength properties;
Fig. 6 - another embodiment of the composite material with hollow spheres compacted in the centre of the article;
Fig. 7 - another embodiment of the composite material with hollow spheres placed along the surface of a profiled perforated sheet;
Fig. 8 - schematic drawing of one embodiment of a means for compacting the composite material;
Fig. 9 - one embodiment of a device for displacing and keeping the hollow spheres relative to an axis of a product, as well as compacting the composite material;
Fig. 10 - another embodiment of a device for displacing and keeping the hollow spheres relative to an axis of a product, as well as compacting the composite material containing the hollow spheres with ferromagnetic properties and powder matrix material;
Fig. 11 - another embodiment of a device for displacing and keeping the hollow spheres relative to an axis of a product, where the device comprises means for filling in matrix material in liquid condition; the figure shows schematic vertical cross-section of side view and horizontal cross-section top view of the device.

### Examples of Implementation of the Invention

### Example 1

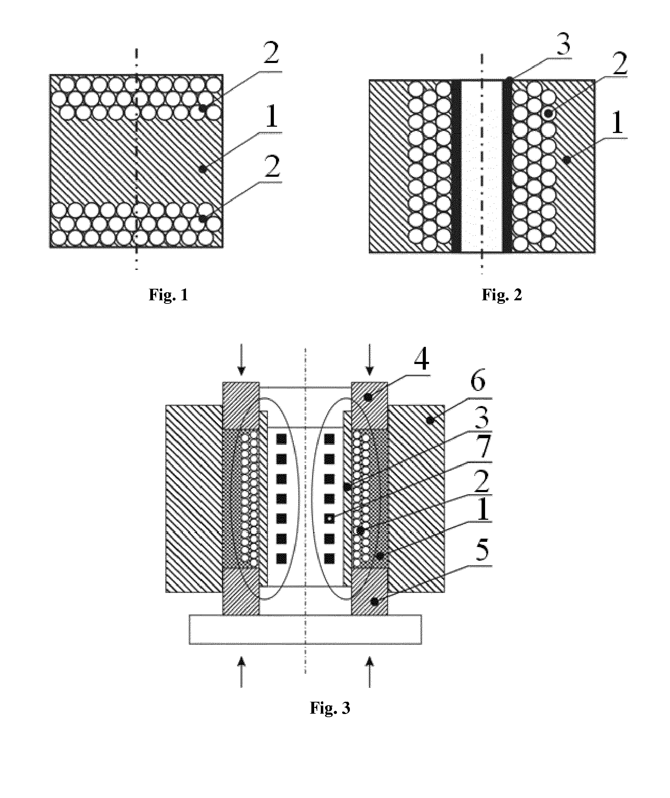

A composite material is proposed comprising: (i) a powder 1 having content of Cu - 85 weight % and Sn - 15% weight %; the powder 1 particle size being 20 µm and (ii) hollow steel spheres 2 having a diameter of 3 mm with a wall thickness of 15 µm. These hollow spheres are arranged symmetrically on both sides of the article at its surface (Fig. 1). To manufacture such a product a layer of hollow steel spheres 2 are poured into a mould cavity. The layer of hollow steel spheres 2 is retained at the bottom of the mould by using a magnet. Then the mould cavity is filled with said powder 1 and then again a layer of hollow spheres 2. The material is being compacted at a pressure of 500 MPa. Sintering is performed at a temperature of 850 °C. This enables to produce a product, which different parts have a significant difference by weight.

### Example 2

A composite material is proposed comprising: (i) a powder 1 having content of Cu - 85 weight % and Sn - 15% weight %; the powder 1 particle average size being 20 µm and (ii) hollow steel spheres 2 having a diameter of 2.5 mm with a wall thickness of 15 µm. The material is used for producing an article of cylindrical shape, having outer diameter of 80 mm, diameter of inner cylindrical hollow - 20 mm and height - 60 mm (Fig. 2). Thus the product is formed as a thick-walled pipe, the inner side of which is a copper casing (pipe) 3 having thickness of 2 mm; next layer being 7-10 mm thick and formed of the hollow steel spheres 2 and the outer layer of the powder 1. To produce such a product a pipe 3 of nonmagnetic material is mounted in the mould cavity. A magnet is placed in the pipe's 3 cavity. The hollow steel spheres 2 are being poured in the mould cavity (outside of the pipe 3). Under the influence of the magnet, steel hollow spheres 2 move towards the outer wall of the pipe 3. The mould is then filled-in with the powder 1. The material is then being compacted and sintered. This enables to produce a tubular product having different properties of the material in the radial section.

The material can be compacted using device shown on Fig. 3. The device comprising an upper punch 4, a lower punch 5, a mould 6, a pipe 3 of non-magnetic material (e.g. Cu), in which an electromagnet 7 is installed. A layer of the steel hollow spheres 2 and a layer of the powder 1 is being placed in the mould 6 cavity. The device operates as follows. Before filling in the mould 6 by materials, the electromagnet 7 is being switched on. The steel hollow spheres 2 are being introduced in the mould 6 cavity and then distributed evenly over the surface of the pipe 3. Then, with the electromagnet 7 being switched on, thereby keeping the layer of the steel hollow spheres 2 along the pipe's 3 surface, the powder 1 is being introduced in the mould 6. Further, the material is being compacted in axial direction pressing it between the upper punch 4 and the lower punch 5.

### Example 3

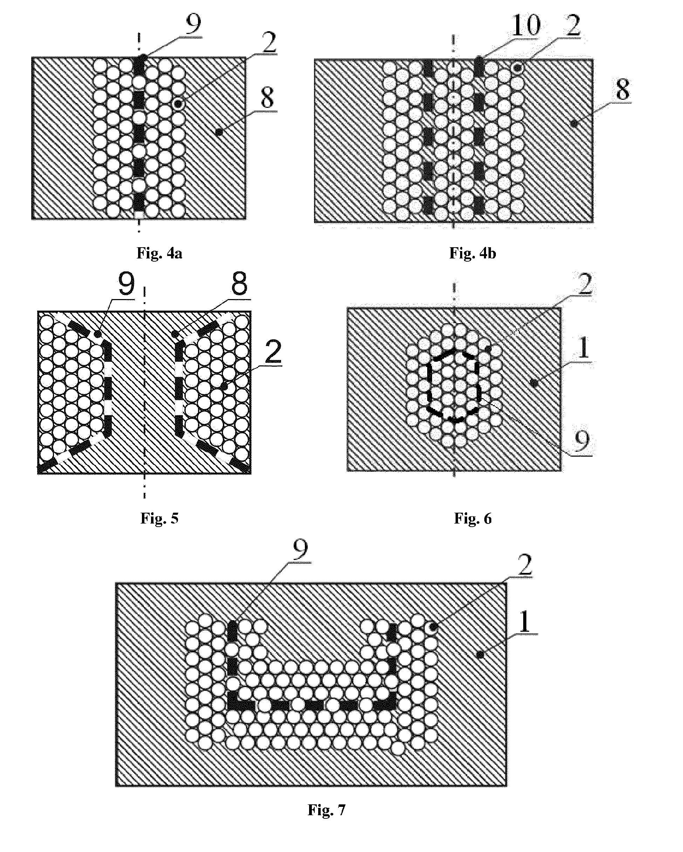

A composite material is proposed comprising an iron-copper based alloy powder 8, hollow steel spheres 2 having an average diameter of 5 mm, as well as perforated steel sheet 9 having thickness of 1.0 mm and round mesh having diameter of 6-8 mm (Fig. 4a). The hollow steel spheres 2 are arranged on both sides of the perforated sheet 9 in one or several layers. Compacting of the material is being performed in radial direction towards the article's longitudinal axis. The perforated sheet 9 is being used as a magnetic core used to guide magnetic field. The hollow steel spheres 2 are being kept by electromagnetic force along the perforated sheet 9 during filling-in the mould cavity and compacting the material.

According to another embodiment the perforated sheet 9 can be folded or rolled-up to form a shape of a pipe as shown in Fig. 4b. This article has a perforated pipe 10 with layers of the hollow steel spheres 2 placed inside and outside of the pipe 10, as well as iron-copper based alloy powder 8 placed inside and outside of the pipe 10, compacted and sintered. Perforation in the sheet 9 or the pipe 10 allows the hollow steel spheres 2 to freely permeate through it before and during compaction. In addition the perforated sheet(s) 9 can be profiled to obtain an article with more complicated structure and increase its strength properties (Fig. 5).

### Example 4

A composite material is proposed comprising a non-magnetic powder 1 and hollow spheres 2 having magnetic properties. The hollow spheres 2 are arranged and compacted in the center of the article in the shape of a kernel (Fig. 6). This was achieved by applying the method explained above, and using respective shape of the perforated sheet 9.

### Example 5

A composite material is proposed which is similar to ones presented in Examples 3-4. In this case, the hollow spheres 2 are placed along the volume of the product, in accordance with a predetermined profile shape of the perforated sheet 9 (Fig. 7).

### Example 6

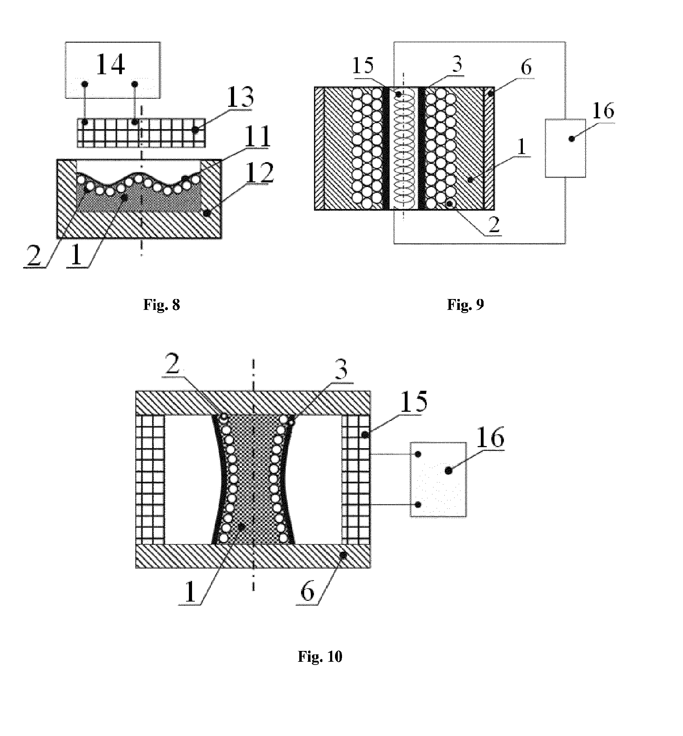

There is proposed a composite material, which is similar to one set forth in the Example 5, however the hollow spheres 2 are made of ceramic material (e.g. SiC) coated by particles having pronounced magnetic properties. To obtain an article of the proposed material, a steel mesh 11, being bent according to profile required is being placed into a mould 12 cavity filled-in by a Fe-C-Cu powder 1 and hollow spheres 2 (Fig. 8). After applying a magnetic field to the steel mesh 11 the hollow spheres 2 are moving towards the mesh 11 and locate along the mesh 11 surface. Compacting of the material is performed by magnetic pulsed compaction (known from the prior art) using a flat inductor 13 supplying current discharges of 2-3 KA within 10-20 microseconds from a generator 14.

### Example 7

There is offered another composite material similar to ones explained above, where the powder 1 is titanium powder having average particles size of 80 µm. The proposed composite material (as well as some other composite materials according to the present invention) can be obtained using device shown in Fig. 9. The device comprises a mould 6, cylindrical spiral inductor 15 electrically connected with an alternator 16.

The device operates as follows. The cylindrical spiral inductor 15 is being inserted into a hollow part of a pipe 3, having non-magnetic properties. Alternating current is being supplied form the alternator 16, thus creating a magnetic field keeping layer of the hollow spheres 2 with magnetic properties (poured into the mould 6 cavity) along the outer surface of the pipe 3. Further the mould 6 cavity is being filled-in with said titanium powder 1. Afterward the magnetic-pulse forming of the material in the radial direction is being performed supplying electric discharge from the alternator 16 to the inductor 15.

The proposed device allows obtaining also more complex structure of products. This can be achieved using profiled pipe 3 and respectively profiled shape of the inductor 15 (Fig. 10; the position numbering as set forth in the Example 7).

The product shown in Fig. 1, 2, 4a, 4b, 5, 6, 7 and other embodiments, obvious for the skilled person in view of the present invention can be also obtained using molten metal or metal alloy, or organic polymer (mono, two or more component) in liquid condition as a matrix material for filling in the mould while keeping hollow particles displaced in a predetermined direction relative to an axis of the product.

### Example 8

There is offered another composite material similar to ones explained above comprising matrix material and metal hollow spheres, wherein matrix material is aluminium alloy, for example QQ-A-250/12 (by AMS 4164, AMS 4165 standards), but hollow spheres are steel hollow spheres with diameter of 2-6 mm.

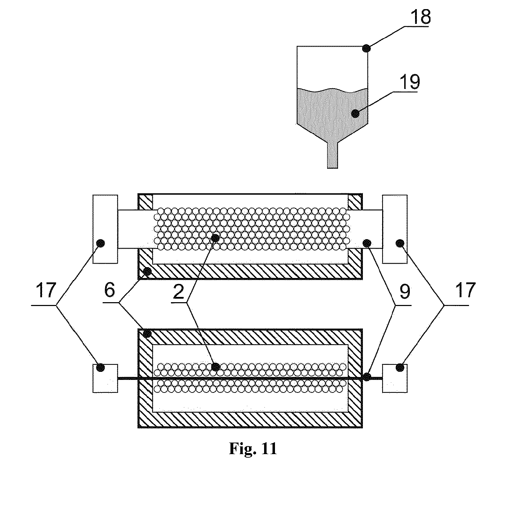

The device (Fig. 11) adapted for producing the proposed composite material contains permanent magnets 17 (alternatively these can be electromagnets 17), mould 6 and feeder 18 of molten metal, alloy, or polymer in liquid condition. The device operates as follows. A perforated sheet 9 having ferromagnetic properties is being located in the mould 6 between the magnets 17. Magnetic field is being applied to the sheet 9. The hollow spheres 2 having ferromagnetic properties are being poured into the mould. Under magnetic field influence the hollow spheres 2 are being located along the sheet 9 (on both sides of the sheet 9). The matrix material - a molten metal 19 (or alloy, or polymer in liquid condition) is being fed into the mould 6 from the feeder 18. After filling in the mould 6 the matrix material is being cooled down (in case of polymer - dried) and solidified.

### Sources of information:

1. RU 2244036.
2. RU 2017852.
3. RU2223341.
4. RU 2251563.
5. Christian Augustin. Multifunctional Metallic Hollow Sphere Structures: Manufacturing, Properties and Application (EngineeringMaterials).
6. Christoph Veyhl, Thomas Fiedler, Tobias Herzig, Andreas Öchsner, Timo Bernthaler. Thermal Conductivity Computations of Sintered Hollow Sphere Structures. Metals 2012, 2, 113-121.
7. A.Kennedy. Porous_metals_and_metal_foams_made_from_powders www.intechopen.com.
8. H. Göhler, U. Jehring, K. Kummel, J. Meinert, P. Quadbeck, G. Stephani, B. Kieback. Metallic Hollow Sphere Structures- Status and Outlook. Proceedings CELLMAT 2012, Dresden, 07.-09.11.2012

## Claims

1. A product of composite material comprising a matrix material and hollow spheres located therein, **characterized in that** the hollow spheres are made of a material having ferromagnetic properties and are displaced in a predetermined direction relative to an axis of the product, and the matrix material is not having ferromagnetic properties.

2. The product according to claim 1, **characterized in that** the matrix material is having maximal magnetic inductivity less than 200 and coercive force less than 4 KA/m.

3. The product according to claim 1 or 2, **characterized in that** the matrix material is selected from the group consisting of metal powder, casting metal, casting alloy and polymer.

4. The product according to any preceding claims, **characterized in that** the hollow spheres are made of ceramic material coated with particles having ferromagnetic properties.

5. The product according to any preceding claims, **characterized in that** the hollow spheres are located along a perforated sheet or mesh having ferromagnetic properties, wherein the size of the perforation exceeds the diameter of the hollow spheres.

6. The product according to any preceding claims, **characterized in that** the hollow spheres are located in the matrix material on the directions of the magnetic lines of force.

7. A method of manufacturing of a product of composite material, comprising a matrix material and hollow spheres with ferromagnetic properties located in the matrix material, comprising the steps of (i) filling a mould, (ii) compacting and (iii) sintering, **characterized in that** the mould is being filled in by metal powder or metal alloy, wherein before or during the filling of the mould the hollow spheres are displaced relative to an axis of the product and are retained by a magnetic field up to the end of filling the mould.

8. The method according to claim 7, **characterized in that** the displaced hollow spheres are retained by a magnetic field at least during initial stage of the compacting step.

9. The method according to claim 7, characterized that the mould is being filled in by molten metal or molten metal alloy, wherein after the step (i) filling the mould follows the step (ii) cooling and solidifying of the metal or metal alloy.

10. The method according to claim 7, characterized that the mould is being filled in by organic polymer in liquid condition, wherein after the step (i) filling the mould follows the step (ii) drying or solidifying of the polymer.

11. A device for manufacturing the product of composite material according to any claims from 1 to 6, comprising a mould and a means for filling of the material, **characterized in that** it further comprises a magnetic or electromagnetic means adapted for displacement of the hollow spheres, having ferromagnetic properties, relative to the axis of the product during filling the mould with the hollow spheres and matrix material.

## Amended claims

### Amended claims in accordance with Rule 137(2) EPC.

1. A product of composite material comprising a matrix material and hollow spheres located therein, wherein the hollow spheres are made of a material having ferromagnetic properties and are displaced in a predetermined direction relative to an axis of the product, and the matrix material has maximal magnetic inductivity less than 200 and coercive force less than 4 KA/m, where the hollow spheres are located along a perforated sheet or mesh having ferromagnetic properties, where the size of the perforation exceeds the diameter of the hollow spheres.

2. The product according to claim 1, **characterized in that** the matrix material is either metal powder, or casting metal, or casting alloy, or polymer.

3. The product according to any preceding claims, **characterized in that** the hollow spheres are made of ceramic material coated with particles having ferromagnetic properties.

4. The product according to any preceding claims, **characterized in that** the hollow spheres are located in the matrix material on the directions of the magnetic lines of force.
